# EUROPEAN PATENT APPLICATION

(11) **EP 1 741 341 A1**
(43) Date of publication of application: **10.01.2007**
(21) Application number: 05014796.6
(22) Date of filing: 07.07.2005
(51) Int. Cl.: A22C 17/00

(54) **Machine for the production of food portions with automatic parameter calculation**

(71) Applicant: CFS Slagelse A/S, 4200 Slagelse (DK)
(72) Inventor: Kofoed, Niels Peter, 4340 Toelloese (DK); Kristiansen, Carsten S., 4200 Slagelse (DK)
(74) Representative: Wolff, Felix

(57) **Abstract**

The present invention is related to a machine (1) for the production of food portions (11) with certain parameters (L,H,W), the machine comprising several components (2-8) which are adjustable depending on the parameters of the portions.

## Description

The present invention is related to a machine for the production of food portions with certain parameters, the machine comprising several components which are adjustable according to the parameters of the portions.

The above-mentioned machines are known in the state of the art and are used to produce a large variety of different food portions. However, when the production is changed from one portion to another, a so called recipe-change, a large number of parameters at the various components of the above-mentioned machines have to be changed. In a lot of cases, this is very time consuming and/or a rather difficult task for the workers who operate the machines. During the change the machines stand still, which means a loss in productivity.

It was therefore the objective of the present invention to provide a machine that allows an easy recipe-change.

The problem is solved with a machine for the production of food portions with certain parameters, the machine comprising several components, which are adjustable according to the parameters of the portions, whereas the adjustment of the components is executed automatically by a computer after at least one parameter of the food portion has been inputted into the computer.

It was totally surprising and could not have been expected by a person skilled in the art, that the inventive machine allows an easy, timesaving recipe-change. The inventive machine is easily manufactured and operated.

The inventive machine allows the production of food portions which comprise certain parameters. These parameters are for example the size, the length, the volume and the weight of the portion. Other parameters are the density of the portion and the capacity of the machine based on the numbers of portions produced per minute. According to the present invention, the inventive machine comprises several components which are used to process, to transport, to configure the portions into a certain format and/or to package the portions and which are adjustable to meet the desired parameters of the portions. Such components are for example a grinder, a slicer, a portion cutter, transportation belt, a check-weigher, separation means, format-configuration means and packaging machines. After at least one parameter, preferably several parameters have been submitted to the inventive machine, one or more components of the inventive machine are adjusted to produce the desired portion. The adjustment is done by a computer, which alters for example the pump rate of the grinder and/or the vacuum-level within the grinder. Additionally or alternatively the cutting frequency of the portion-cutter is changed.

A preferred embodiment of the present invention, additionally to the parameters of the portion machine parameters, preferably control schemes, are inputted as well into the computer. These control-schemes influences the mode in which the inventive machine reacts if, for example, the portions do not comprise a certain parameter e.g. the weight.

In order to input the parameters into the inventive machine, this machine preferably comprises input means. These input means is preferably a touch panel to input the parameters.

In an other preferred embodiment the parameters are not manually inputted, but are connected to a certain type of packaging into which the portions are packaged. As soon as the inventive machines receives information about the type of packaging that is used to package the food portions, it automatically adjusts all relevant production parameters so that the food portion packaged into the identified packaging has the desired properties; i. e. the right recipe.

In an other preferred embodiment of the present invention, the information about the parameters of a certain food portion are connected to a tool which is part of one of the components of the inventive machine. Such a tool can be for example the die-set for the deep-drawing- and/or sealing device of a packaging machine. These tools are normally related to a very specific product; i. e. a very specific packaging bag filled with a clearly specified portion.

Preferably, the packaging and/or the tool comprise data storing means such as for example transponders.

Preferably, the inventive machine comprise data reading means to read the data on the storing means and adjust the parameters for the components on the basis of the received data information.

The invention is now explained in further details according to figures 1 to 5. These explanations do not limit the scope of protection.

**Figure 1** shows a food processing machine according to the state of the art.

**Figure 2** shows a portion, which can be produced.

**Figure 3** shows one embodiment of the inventive machine.

**Figure 4** shows an other embodiment of the inventive machine.

**Figure 5** shows a third embodiment of the inventive machine.

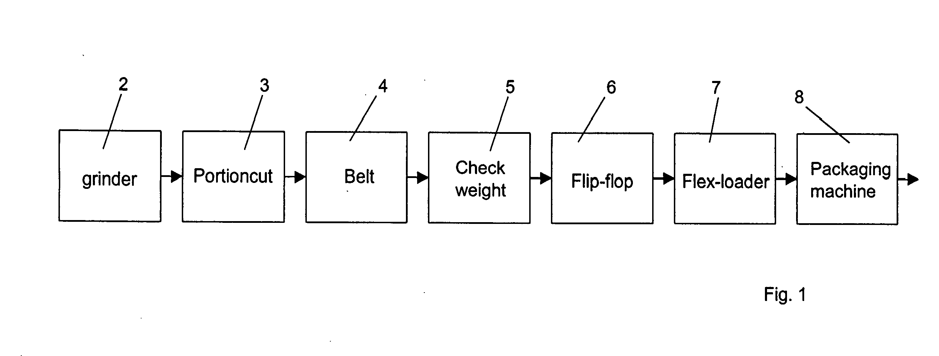

**Figure 1** shows a machine according to the preamble of patent claim 1. The machine comprises a grinder 2 that allows the grinding of for example meat inputted into this machine. At its outlet, the grinder 2 produces a string of, for example, minced meat, which determines already two dimensions of the portions to be produced. This string is cut in to portions by portion cutter 3, whereas the length of the portion, cut from the string, determines the weight of the portion. The portions are then transported by belt 4 to a check-weighing device 5, in which the weigh of the produced portions is determined. In the subsequent flip-flop, the flow of portion is divided in portions which are further processed, e. g. packaged and portions which are sorted out, for example due to wrong weight. In the following flex-loader 7 the portions are arranged in certain formats, which are equivalent to the format of packagings produced during one cycle of the packaging machine 8. In the packaging machine 8, the goods are for example put into a tray and covered by a top film, which is sealed to the tray. The packaging machine can be a so-called form-fill-seal-machine, in which the trays are formed, filled with the packaging item and sealed with a top-film or a so-called traysealer in which the trays are filled with the packaging item and then sealed with a top film. The person skilled in the art understands that the portion-cutter can be, for example, also a slicer, which cuts loaves of, for example sausage, bacon or cheese into slices and arranges them in a certain configuration. In this case the grinder 2 is omitted.

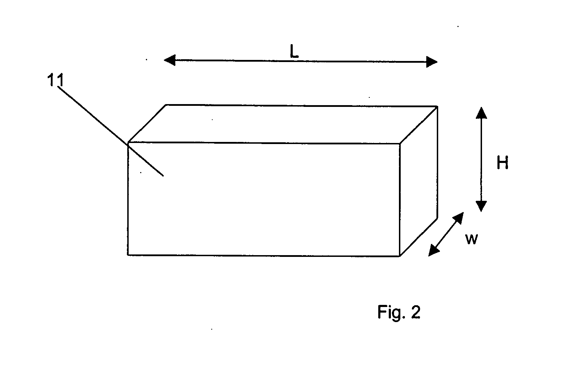

In **figure 2** a portion 11 is depicted. The portion 11, in this case a portion of minced meat comprises the parameters W, H, L which are the width, the height and the length of one portion, respectively. The width and the height are determined by the string produced by the grinder. The length L of the portion is determined by portion cut 3, which cuts discrete portions from the string. The weight of the portion can be influenced by a vacuum that is applied to the grinder and that subtracts ail from the minced meat. In the present example the desired weigh, the cross-section and the length and the production rate (portions per minute) are inputted into the computer. After the parameters are inputted into the inventive machine, all different components of the machine are adjusted automatically to produce this portion and to preferably package it into a certain packaging bag.

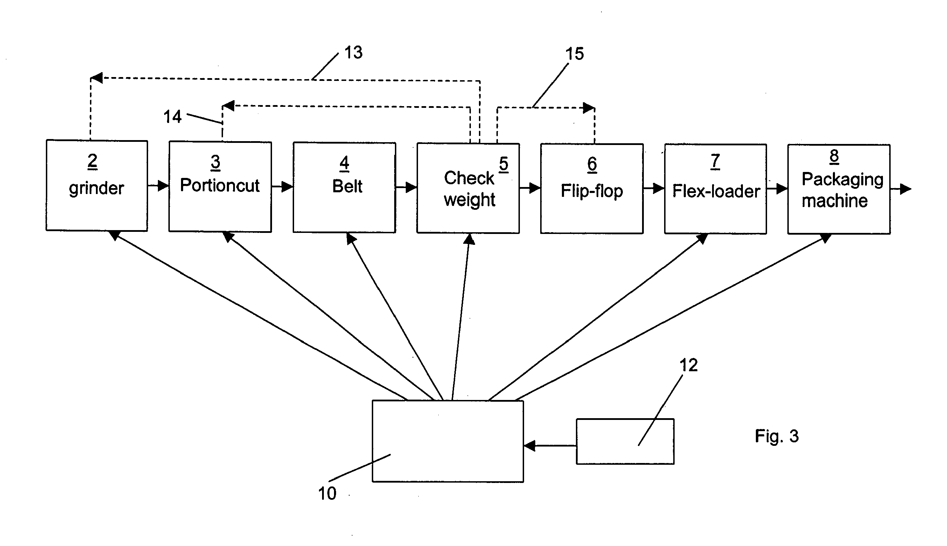

**Figure 3** shows another embodiment of an inventive machine. Besides the components 2 -8, which have already been explained according to figure 1, the inventive machine comprises a computer 10, which controls the different components 2 -8 of the inventive machine. This computer has an input 12, for example a touch panel. Via this touch panel, the relevant parameters in the present case, i. e. the size to be run on the machine, the length of the portion and the capacity based on the number of portions per minute have been keyed into computer 10. This computer automatically adjusts all the different components of the inventive machines. For example the pump capacity, i. e. the velocity of the string produced by grinder 2, the vacuum-level in the grinder, the frequency of the knife of the portion cutter 3, the speed of belt 4 and the band-width of acceptable portions are adjusted automatically. Additionally, the computer 10 automatically adjusts the flexloader to produce the right format of portions and, if needed, sends data to the packaging machine to adjust its performance. The dotted lines 13 -15 indicate that the results of the check-weigher are used to control the weight of the portions; i. e. the grinder and the portion-cutter.

This control performance is influenced by control-schemes, which have also been inputted into the computer and which determines how the inventive machine reacts on portions, which do not have the desired weight. Additionally, the check-weigher controls the flip-flop in order to assure that under-weighted portions are sorted out.

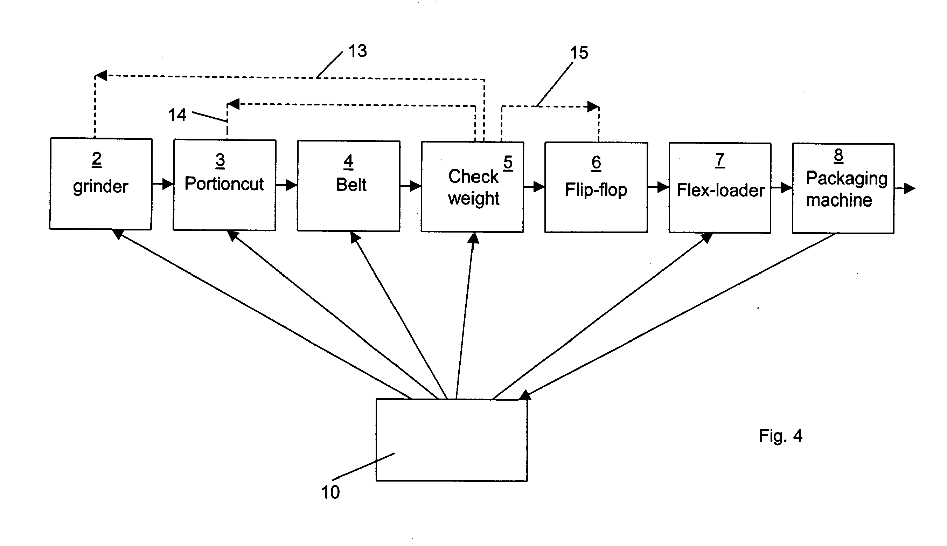

**Figure 4** shows an other embodiment of the present invention. Essentially, the machine according to figure 4 is equivalent to the machine according to figure 3. However, in this case, the parameters of the portions to be produced are not keyed in by a worker but are inputted into the computer by the packaging machine, which provides information for the computer 10 which type of packaging bag is presently produced on the packaging machine. Based on this information, the computer 10 adjusts the components 2- 7 so that the portions and their format coincide with the packaging bags produced on the packaging machine.

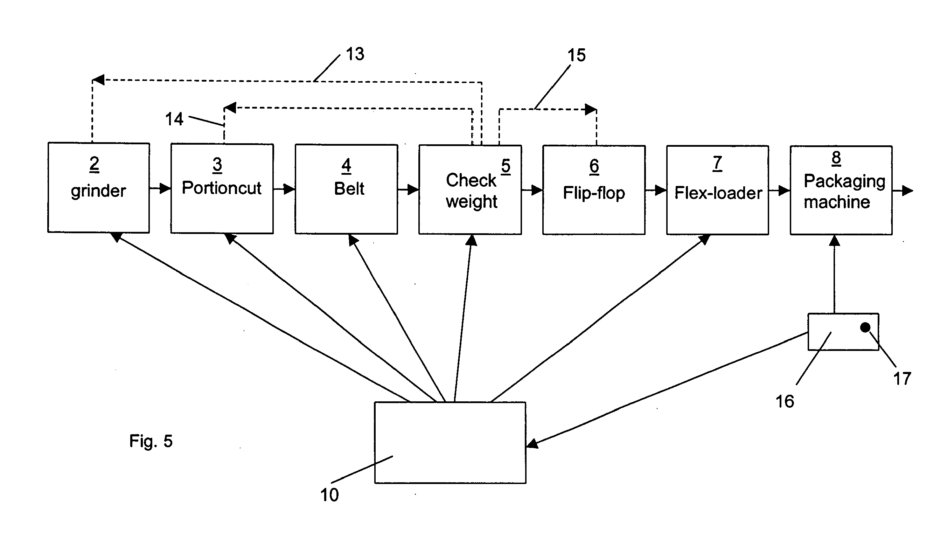

In **figure 5** a further embodiment of the inventive machine is shown. Essentially, this inventive machine corresponds with the machine according to figure 4. However, in **figure 5** an additional tool 16 is shown that comprises a transponder 17. The inventive machine has reading means (not depicted) which are able to read the data stored on the transponder. As soon as the tool is loaded into the packaging machine the packaging machine is adjusted to produce packaging bags according to the inserted tool. Additionally, the computer receives information regarding this tool and adjusts the components 2 - 7 accordingly.

### Reference list

- 1: inventive machine
- 2: grinder
- 3: portion cutter, slicer
- 4: belt
- 5: check-weigher
- 6: flip-flop
- 7: flexloader
- 8: packaging machine
- 10: computer
- 11: portion
- 13 - 15: control loops
- 16: tool
- 17: transponder
- H: Height
- L: Length
- W: Width

## Claims

1. Machine (1) for the production of food portions (11) with certain parameters (L, H, W), the machine comprising several components (2 - 8), which are adjustable depending on the parameters (L, H, W) of the portions, **characterized in that** the adjustment of the components (2 - 8) is executed automatically by a computer (10) after at least one parameter of the food portion has been inputted into the computer.

2. Machine (1) according to claim 1, **characterized in, that** the parameters are the cross section, the length and/or the weight of the portion and/or the production rate.

3. Machine (1) according to one of the preceding claims, **characterized in, that** machine parameters, preferably control schemes, are inputted into the computer.

4. Machine (1) according to one of the preceding claims, **characterized in, that** it comprises a input-means, preferably a control panel to input the parameters.

5. Machine (1) according to one of the preceding claims, **characterized in that** the parameters are connected to the type of packaging, into which the portions are packaged.

6. Machine (1) according to one of the preceding claims, **characterized in that** the parameters are connected to a tool (16) which is part of one of the components (2 - 8).

7. Machine according to claims 5 or 6, **characterized in, that** the packaging and/or the tool (16) comprises data storing means (17), preferably a transponder.

8. Machine (1) according to claims 5 - 7, **characterized in, that** it comprises data reading means to read the information stored on the transponder.
